# EUROPEAN PATENT APPLICATION

(11) **EP 4 672 432 A1**
(43) Date of publication of application: **31.12.2025**
(21) Application number: 25151639.9
(22) Date of filing: 14.01.2025
(51) Int. Cl.: H01M 10/6554, H01M 50/209

(54) **BATTERY BOX AND BATTERY PACK**

(30) Priority: 24.06.2024 CN 202421453902 U; 13.09.2024 WO PCT/CN2024/118689
(71) Applicant: Eve Energy Co., Ltd., Huizhou Guangdong 516000 (CN)
(72) Inventor: Huang, Liliang, Huizhou, Guangdong, 516000 (CN); Chen, Zhiwei, Huizhou, Guangdong, 516000 (CN)
(74) Representative: Michalski Hüttermann & Partner Patentanwälte mbB

(57) **Abstract**

Disclosed in the present application are a battery box and a battery pack. The battery box includes a box body (1); a bottom guard plate (2), in a form of a flat plate, the bottom guard plate (2) being spaced apart from the box body (1) and an overhanging portion is formed between the bottom guard plate and the box body (1); and a connecting assembly (3), provided in the overhanging portion. Both of the box body (1) and the bottom guard plate (2) are connected with the connecting assembly (3) to allow the bottom guard plate (2) to be attached to the box body (1).

## Description

### TECHNICAL FIELD

The present application relates to the technical field of batteries, and in particular, to a battery box and a battery pack.

### BACKGROUND

As the capacity of batteries increases, more and more attention is paid to the safety and protection thereof, especially for battery boxes assembled with a plurality of cells. Currently, a mainstream battery box mainly relies on a bottom guard plate to protect against impact, scraping, and external ball hit, so that the bottom guard plate is critical to the safety of the battery box. However, in the related technology, the bottom guard plate, in order to form an effective lock attachment with the battery box, needs to be molded and processed to form a complex shape. In addition, the whole bottom guard plate is generally made of steel plate, with large overall weight and weak anti-corrosion performance, which results in high production costs and high maintenance costs of the bottom guard plate.

A composite bottom guard plate in a form of a flat plate is difficult to be constructed into a shape that matches the battery box, so that the bottom guard plate is directly suspended from the battery box, thereby leading to that the bottom guard plate can not form a reliable fixation with the battery box.

### SUMMARY

In a first aspect, provided in the present application is a battery box, including: a box body; a bottom guard plate, in a form of a flat plate, the bottom guard plate being spaced apart from the box body and an overhanging portion is formed between the bottom guard plate and the box body; and a connecting assembly, provided in the overhanging portion. Both of the box body and the bottom guard plate are connected with the connecting assembly to allow the bottom guard plate to be attached to the box body.

In a second aspect, provided in the present application is a battery pack, including the above battery box.

By setting the connecting assembly in the overhang formed by the bottom guard plate and the box body in the form of the flat plate, it can be effectively avoided that the bottom guard plate is directly suspended from the box body, so that the bottom guard plate in the form of the flat plate can be reliably attached to the box body through the connecting assembly, thereby realizing optimization of the fixing method between the bottom guard plate and the box body.

### BRIEF DESCRIPTION OF THE DRAWINGS

Fig. 1 is a schematic structural diagram of a battery box according to a first embodiment of the present application; and
Fig. 2 is an enlarged view at area A in Fig. 1;
Fig. 3 is a schematic structural diagram of a liquid cooling plate according to the first embodiment of the present application;
Fig. 4 is a schematic structural diagram of a battery box according to a second embodiment of the present application;
Fig. 5 is an enlarged view at area B in Fig. 4;
Fig. 6 is a schematic structural diagram of a battery box according to a third embodiment of the present application;
Fig. 7 is an enlarged view at area C in Fig. 6;
Fig. 8 is a further schematic structural diagram of the battery box according to the third embodiment of the present application;
Fig. 9 is a schematic structural diagram of a liquid cooling plate according to the third embodiment of the present application;
Fig. 10 is a schematic structural diagram of a bushing according to the third embodiment of the present application; and
Fig. 11 is a schematic structural diagram of a bottom guard plate according to the present application.

The meanings of the attached markings are as follows:
1 box body, 11 liquid cooling plate, 111 second assembly hole, 112 second rivet nut, 12 box frame, 2 bottom guard plate, 21 first assembly hole, 22 first fastener, 23 first composite layer, 24 second composite layer, 25 steel plate layer, 3 connecting assembly, 31 first assembly bracket, 311 first connecting part, 312 first rivet nut,32 bushing, 321 second fastener.

### DETAILED DESCRIPTION

### Embodiments of the present application

### First embodiment

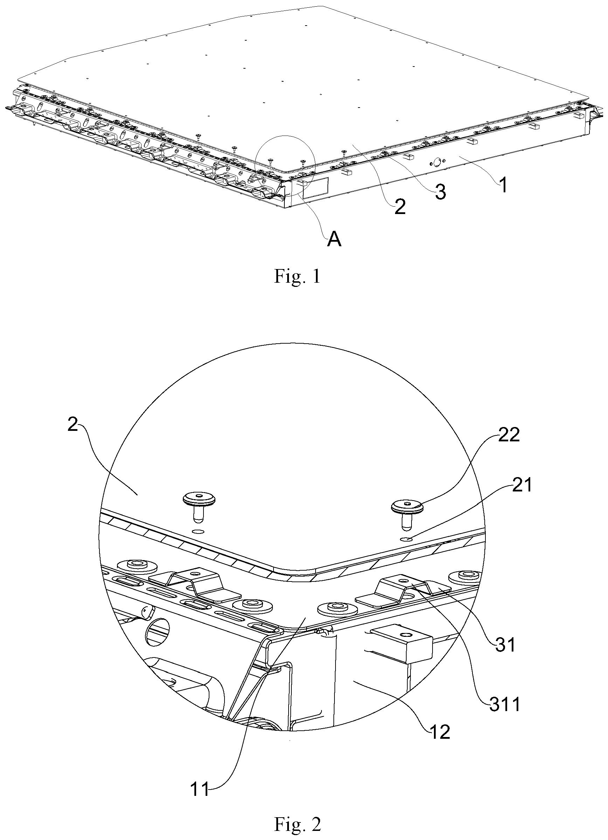

Referring to Figs. 1, 2 and 3, disclosed in this embodiment is a battery box. The battery box included a box body 1, a bottom guard plate 2 and a connecting assembly 3. In some implementations, the bottom guard plate 2 is provided in the form of a flat plate, and the bottom guard plate 2 is spaced apart from the box body 1 and an overhanging portion is formed between the bottom guard plate 2 and the box body 1. The connecting assembly 3 is provided in the overhanging portion, and both of the box body 1 and the bottom guard plate 2 are connected with the connecting assembly 3 to allow the bottom guard plate 2 to be attached to the box body 1. In some implementations, the bottom guard plate 2 may be attached to any side of the box body 1 in accordance with the actual situation. In some implementations, by connecting the connecting assembly 3 to the overhang formed by the bottom guard plate 2 and the box body 1 in the form of the flat plate, it can be effectively avoided that the bottom guard plate 2 is directly suspended from the box body 1, so that the bottom guard plate 2 in the form of the flat plate can be reliably attached to the box body 1 through the connecting assembly, thereby realizing optimization of the fixing method between the bottom guard plate 2 and the box body 1.

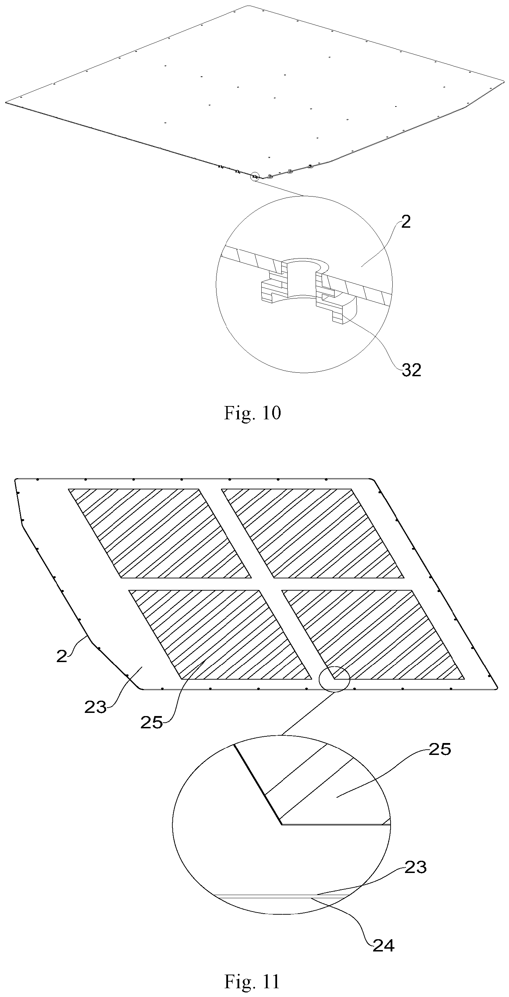

Referring to Fig. 11, in this embodiment, the bottom guard plate 2 includes a first composite layer 23 and a second composite layer 24, and a steel plate layer 25 is provided between the first composite layer 23 and the second composite layer 24. In some implementations, the first composite layer 23 and the second composite layer 24 are made of a thermoplastic composite material. In some implementations, they are made of PP (Polypropylene) continuous fiberglass material. In some implementations, the first composite layer 23 is bonded to a side surface of the steel plate layer 25 and the second composite layer 24 is bonded to an opposite side surface of the steel plate layer 25. In some implementations, the steel plate layer 25 is completely wrapped between the first composite layer 23 and the second composite layer 24 to increase the corrosion resistance of the bottom guard plate 2. Moreover, the bottom guard plate 2 in this embodiment consists of the first composite layer 23, the steel plate layer 25, and the second composite layer 24, so that the bottom guard plate 2 in this embodiment is lighter than a bottom guard plate 2 made of pure steel with the same thickness and/or strength has a lower production cost.

Referring to Figs. 1 and 2, in this embodiment, the box body 1 includes a liquid cooling plate 11 and a box frame 12, the box frame 12 is fixedly connected to a side of the liquid cooling plate 11 away from the bottom guard plate 2, and the connecting assembly 3 is provided between the liquid cooling plate 11 and the bottom guard plate 2. In some implementations, the box frame 12 is formed by a combination of one or more longitudinal beams and one or more transverse beams. In some implementations, the box frame 12 may be fixedly connected to the liquid cooling plate 11 by welding, bolting, riveting, or the like. In some implementations, the box frame 12 is fixedly connected to a side of the liquid cooling plate 11 and forms at least one chambers. The connecting assembly 3 is provided on an opposite side of the liquid cooling plate 11, so that the bottom guard plate 2 is connected to the liquid cooling plate 11 through the connecting assembly 3, and therefore is assembled on the outer side of the liquid cooling plate 11, which realizes the protection of the liquid cooling plate 11, thereby effectively preventing the liquid cooling plate 11 or the box body 1 from being damaged by knocking the bottom, external ball hit, etc.

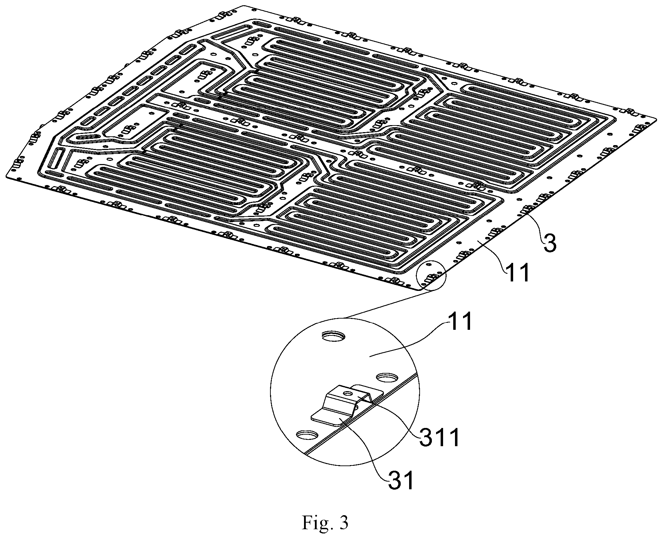

Referring to Figs. 2 and 3, in this embodiment, the connecting assembly 3 includes a plurality of first assembly brackets 31 connected to the box body 1, each of the plurality of first assembly brackets 31 is provided with a first connecting part 311 projecting towards the bottom guard plate 2, and the first connecting part 311 is connected to the bottom guard plate 2. In some implementations, the plurality of first assembly brackets 31 are distributed on a side of the box body 1 close to the bottom guard plate 2. In some implementations, a side of each of the plurality of first assembly brackets 31 may be fixedly connected to the box body 1 by welding, bolting, riveting, etc., and an opposite side of each of the plurality of first assembly brackets 31 projects towards the bottom guard plate 2 to form the first connecting part 311. By connecting the projecting first connecting part 311 to the bottom guard plate 2 in the form of the flat plate, it can be avoided that the bottom guard plate 2 in the form of the flat plate is suspended from the box body 1, so that the bottom guard plate 2 can be fixed to the box body 1 without complicated modeling, thereby realizing the optimization of fixing method between the bottom guard plate 2 and the box body 1. The first assembly bracket 31 may be in the form of a column, a cone, etc. In some implementations, two end parts of each of the plurality of first assembly brackets 31 are fixedly connected to the box body 1, and a middle part of each of the plurality of first assembly brackets 31 projects towards the bottom guard plate 2 to form the first connecting part 311, i.e., each of the plurality of first assembly brackets 31 is U-shaped as a whole, so as to ensure that the first assembly bracket 31 is capable of having a sufficiently large contact area with the box body 1 to form a secure connection. By connecting the projecting first connecting part 311 to the bottom guard plate 2 in the form of the flat plate, the bottom guard plate 2 can be fixed to the box body 1 without complicated modeling, and it can be avoided that the bottom guard plate 2 in the form of the flat plate is suspended from the box body 1, thereby realizing the optimization of fixing method between the bottom guard plate 2 and the box body 1. In some implementations, the bottom guard plate 2 may be connected to the first connecting part 311 by welding, bolting, riveting, or the like. In some implementations, the plurality of first assembly brackets 31 may be distributed at edges of the box frame 12 and on the liquid cooling plate 11, so that the bottom guard plate 2 in the form of the flat plate is connected to the box frame 12 and the liquid cooling plate 11 through the connecting assembly 3, which can effectively avoid that the bottom guard plate 2 is suspended from the box body 1, thereby realizing that the bottom guard plate 2 in the form of the flat plate is reliably attached to the box body 1. In some implementations, the plurality of first assembly brackets 31 may be distributed on a side surface of the liquid cooling plate 11 close to the bottom guard plate 2. In some implementations, the box frame 12, the liquid cooling plate 11 and the bottom guard plate 2 are arranged in sequence along a height direction, and the bottom guard plate in the form of the flat plate is connected to the first connecting part 311 of each of the plurality of first assembly brackets 31, so that the bottom guard plate 2 in the form of the flat plate is connected to the box frame 12 and the liquid cooling plate 11 through the connecting assembly 3, which can effectively avoid that the bottom guard plate 2 is suspended from the box body 1, thereby realizing that the bottom guard plate 2 in the form of the flat plate is reliably attached to the box body 1.

Referring to Fig. 2, in this embodiment, the bottom guard plate 2 is opened with a plurality of first assembly holes 21, each of the plurality of first assembly holes 21 is assembled with a first fastener 22, and the first fastener 22 is connected to the first connecting part 311. In some implementations, the first fastener 22 may be a rivet. When assembling the bottom guard plate 2, the bottom guard plate 2 is stacked under the bottom of the box body 1, and is driven to be abutted against the projecting first connecting part 311, which can effectively avoid that the bottom guard plate 2 is suspended from the box body 1; and then the bottom guard plate 2 is in rivet connection with the first connecting part 311 through the first fastener 22., so that the bottom guard plate 2 in the form of the flat plate is fixed to the projecting first connecting part 311, which allows the bottom guard plate 2 in the form of the flat plate to be reliably attached to the box body 1, thereby realizing the optimization of fixing method between the bottom guard plate 2 and the box body 1. In some implementations, the first connecting part 311 may be opened with threaded holes matching the first fastener 22, and the first fastener 22 is a bolt or a screw. When assembling the bottom guard plate 2, the bottom guard plate 2 is stacked under the bottom of the box body 1, and is driven to be abutted against the projecting first connecting part 311, which can effectively avoid that the bottom guard plate 2 is suspended from the box body 1; and then the bottom guard plate 2 is in threaded connection with the first connecting part 311 through the first fastener 22, so that the bottom guard plate 2 in the form of the flat plate is fixed to the projecting first connecting part 311, thereby realizing the optimization of fixing method between the bottom guard plate 2 and the box body 1.

### Second embodiment

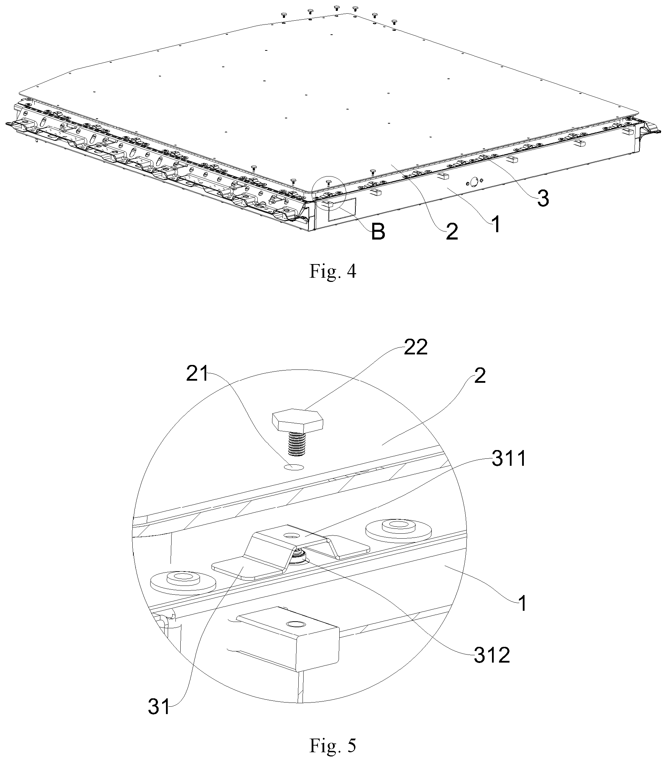

Referring to Figs. 4 and 5, this embodiment is different from the first embodiment in that the battery box further includes a first rivet nut 312, the first rivet nut 312 is assembled to the first connecting part 311, the first fastener 22 passes through a second assembly hole 111 provided on the liquid cooling plate 11 and is connected to the first rivet nut 312. In some implementations, two ends parts of each of the plurality of first assembly brackets 31 are fixedly connected to the box body 1, and a middle part of each of the plurality of first assembly brackets 31 projects towards the bottom guard plate 2 to form the first connecting part 311, i.e., each of the plurality of first assembly brackets 31 is U-shaped as a whole, so as to ensure that the first assembly bracket 31 is capable of having a sufficiently large contact area with the box body 1 to form a secure connection. The first rivet nut 312 is provided on a side of the first connecting part 311 away from the bottom guard plate 2. In some implementations, the middle part of each of the plurality of first assembly brackets 31 projects towards the bottom guard plate 2, so that a cavity is formed on the side of the first connecting part 311 away from the bottom guard plate 2, in which the first rivet nut 312 is provided, thereby fully utilizing the space. In some implementations, the first fastener 22 is a bolt. When assembling the bottom guard plate 2, the bottom guard plate 2 provided in the form of the flat plate is stacked under the bottom of the box body 1, the bottom guard plate 2 in the form of the flat plate is driven to be abutted against the projecting first connecting part 311, which can effectively avoid that the bottom guard plate 2 is suspended from the box body 1, and then the first fastener 22 is driven to pass through a first assembly hole 21 and the second assembly hole 111 and be in threaded connection with the first rivet nut 312, so that the projecting first connecting part 311 is fixed to the bottom guard plate 2 in the form of the flat plate, thereby realizing that the bottom guard plate 2 in the form of the flat plate is reliably attached to the box body 1.

### Third embodiment

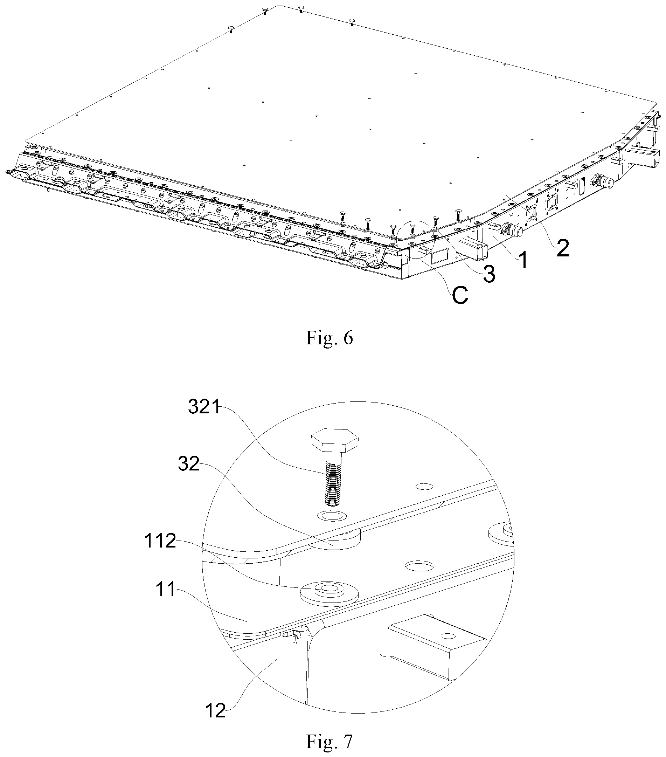

Referring to Figs. 6, 7, 8, 9 and 10, this embodiment differs from the first embodiment or the second embodiment in that the box body 1 does not need to be fixedly connected with a first assembly bracket 31. Specifically, the connecting assembly 3 includes a plurality of bushings 32 connected to the bottom guard plate 2, the plurality of bushings 32 are assembled with second fastener 321, and the second fasteners 321 are connected to the liquid cooling plate 11. That is, the action generated by the second fasteners 321 acts directly on the plurality of bushings 32, so that the second fasteners 321 is prevented from pressing the bottom guard plate 2 directly, thereby resulting in greater safety and reliability. In some implementations, the plurality of bushings 32 are steel bushings. In some implementations, when assembling the bottom guard plate 2, the bottom guard plate 2 in the form of the flat plate is stacked under the bottom of the box body 1, and an end of the bushings 32 away from the bottom guard plate 2 is driven to be abutted against the liquid cooling plate 11, which avoids that the bottom guard plate 2 is suspended from the box body 1; and then, the second fasteners 321 assembled in the plurality of bushings 32 are connected to the liquid cooling plate 11, so that the bottom guard plate 2 in the form of the flat plate can be reliably attached to the liquid cooling plate 11, thereby optimizing the fixation of the bottom guard plate 2 to the box body 1. The plurality of bushings 32 may be connected to the bottom guard plate 2 by welding, bolting, bonding, snap-fitting, or the like.

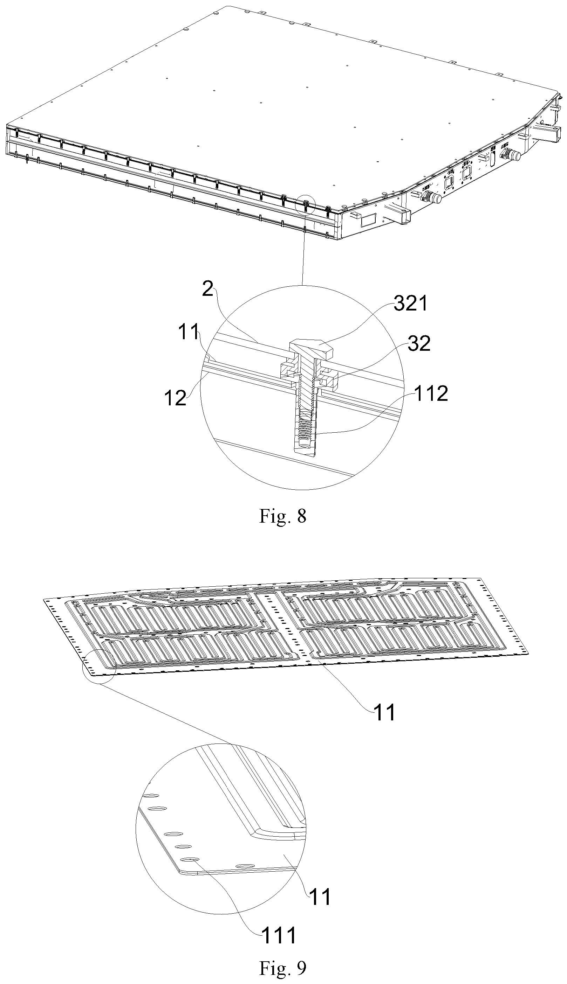

Referring to Figs. 7 and 9, in this embodiment, the liquid cooling plate 11 is provided with a plurality of second assembly holes 111, the plurality of second assembly holes 111 are assembled with second rivet nuts 112, and the second fasteners 321 are connected to the second rivet nuts 112. In some implementations, the second fasteners 321 are bolts. Specifically, when tightening the second fasteners 321, the second rivet nuts 112 deform synchronously and form rivet connections with the liquid cooling plate 11, and at the same time, the second fasteners 321 drive the bottom guard plate 2 in the form of the flat plate to be fixedly connected with the second rivet nuts 112, so that the bottom guard plate 2 in the form of the flat plate is driven to be connected to the box body 1 through the second fasteners 321 and the second rivet nuts 112. In addition, the bottom guard plate 2 in the form of the flat plate is abutted against the liquid cooling plate 11, which can avoid that the bottom guard plate 2 is suspended from the box body 1.

Referring to Figs. 7, 8 and 9, in this embodiment, the box frame 12 is opened with a third assembly hole, and a rod part of the second rivet nuts 112 extends into the third assembly hole. Specifically, when tightening the second fasteners 321, the second rivet nuts 112 deform, so that the second rivet nuts 112, the liquid cooling plate 11 and the box frame 12 are riveted into a tightly fastened whole, and at the same time, the second fasteners 321 drive the bottom guard plate 2 in the form of the flat plate to be fixedly connected with the second rivet nuts 112, so that the bottom guard plate 2 in the form of the flat plate is driven to be connected to the box body 1 by the connection between the second fasteners 321 and the second rivet nuts 112. In addition, the bottom guard plate 2 in the form of the flat plate is abutted against the liquid cooling plate 11, which can avoid that the bottom guard plate 2 is suspended from the box body 1, so that the bottom guard plate 2 in the form of the flat plate to be reliably attached to the box body 1, thereby realizing the optimization of fixing method between the bottom guard plate 2 and the box body 1, effectively reducing the number of fasteners, and lowering production costs.

Referring to Figs. 7, 8, 9 and 10, in some implementations, an end of each of the plurality of bushings 32 penetrates through and is fixedly connected to the bottom guard plate 2, and the other end of the bushing 32 extends toward the liquid cooling plate 11. In some implementations, the rod part of each of the second rivet nuts 112 passes through the respective second assembly hole 111 and the respective third assembly hole in sequence, and a flange part of the second rivet nut 112 is abutted against the side of the liquid cooling plate 11 close to the bottom guard plate 2. In some implementations, the second fastener 321 may be a bolt, and a rod part of the second fastener 321 is capable of passing through the bushing 32 to be connected with the second rivet nut 112. In some implementations, when assembling the bottom guard plate 2, the bottom guard plate 2 in the form of the flat plate is stacked under the bottom of the box body 1, and an end of the bushings 32 away from the bottom guard plate 2 is driven to be abutted against the liquid cooling plate 11, which can avoid that the bottom guard plate 2 in the form of the flat plate is suspended from the box body 1; and then, the second fastener 321 assembled in the bushing 32 in threaded connection with to the second rivet nut 112, and the rod part of the second rivet nut 112 is driven to be deformed, so that the second rivet nuts 112, the liquid cooling plate 11 and the box frame 12 are riveted into a tightly fastened whole. In this way, it is realized that the bottom guard plate 2 in the form of the flat plate is driven to be connected to the box body 1 by the connection between the second fasteners 321 and the second rivet nuts 112, which in turn realizes the optimization of the fixing method between the bottom guard plate 2 and the box body 1, effectively reduces the number of fasteners, and lowers production costs.

### Fourth embodiment

A battery pack including a battery box in any one of the above embodiments.

## Claims

1. A battery box, comprising:
a box body (1);
a bottom guard plate (2), in a form of a flat plate, and the bottom guard plate (2) being spaced apart from the box body (1) and an overhanging portion being formed between the bottom guard plate (2) and the box body (1); and
a connecting assembly (3), provided in the overhanging portion, wherein, both the box body (1) and the bottom guard plate (2) are connected with the connecting assembly (3) to allow the bottom guard plate (2) to be attached to the box body (1).

2. The battery box according to claim 1, wherein the box body (1) comprises a liquid cooling plate (11) and a box frame (12), the box frame (12) is fixedly connected to a side of the liquid cooling plate (11) away from the bottom guard plate (2), and the connecting assembly (3) is connected between the liquid cooling plate (11) and the bottom guard plate (2).

3. The battery box according to claim 1 or 2, wherein the connecting assembly (3) comprises a plurality of first assembly brackets (31) connected to the box body (1), each of the plurality of first assembly brackets (31) is provided with a first connecting part (311) projecting towards the bottom guard plate (2), and the first connecting part (311) is connected to the bottom guard plate (2).

4. The battery box according to claim 3, wherein the bottom guard plate (2) is opened with a plurality of first assembly holes (21), the plurality of first assembly holes (21) are assembled with first fasteners (22), and the first fasteners (22) are connected to the first connecting part (311).

5. The battery box according to claim 4, further comprising first rivet nuts (312), the first rivet nuts (312) are assembled to the first connecting part (311), and the first fasteners (22) are connected to the first rivet nuts (312).

6. The battery box according to claim 2, wherein the connecting assembly (3) comprises a plurality of bushings (32) connected to the bottom guard plate (2), the plurality of bushings (32) are assembled with second fasteners (321), and the second fasteners (321) are connected to the liquid cooling plate (11).

7. The battery box according to claim 6, wherein the liquid cooling plate (11) is provided with a plurality of second assembly holes (111), the plurality of second assembly holes (111) are assembled with second rivet nuts (112), and the second fasteners (321) are connected to the second rivet nuts (112).

8. The battery box according to claim 7, wherein the box frame (12) is provided with a third assembly hole, and a rod part of a second rivet nut of the second rivet nuts (112) extends into the third assembly hole.

9. The battery box according to claim 1, wherein the bottom guard plate (2) comprises a first composite layer (23) and a second composite layer (24), and a steel plate layer (25) is provided with between the first composite layer (23) and the second composite layer (24).

10. A battery pack, comprising a battery box as claimed in any one of claims 1-9.
